Europäisches Patentamt

European Patent Office

Office européen des brevets

(19)

(11) Veröffentlichungsnummer: **0 214 365 B2**

(12) **NEUE EUROPÄISCHE PATENTSCHRIFT**

(45) Veröffentlichungstag der neuen Patentschrift:
27.11.91 Patentblatt 91/48

(21) Anmeldenummer: 86104835.3

(22) Anmeldetag: 09.04.86

(51) Int. Cl.⁵: **B60T 8/30, B60T 11/34**

(30) Priorität: 24.08.85 DE 3530318

(43) Veröffentlichungstag der Anmeldung:
18.03.87 Patentblatt 87/12

(45) Bekanntmachung des Hinweises auf die
Patenterteilung:
11.01.89 Patentblatt 89/02

(45) Bekanntmachung des Hinweises auf die
Entscheidung über den Einspruch:
27.11.91 Patentblatt 91/48

(84) Benannte Vertragsstaaten:
FR GB IT

(56) Entgegenhaltungen:
DE-A- 3 121 688

(56) Entgegenhaltungen:
DE-A- 3 317 979
DE-A- 3 319 485
DE-C- 2 904 046
FR-A- 2 552 724
GB-A- 1 468 821
GB-A- 2 042 114
GB-A- 2 055 435
GB-A- 2 074 674

(73) Patentinhaber: ALFRED TEVES GmbH
Guerickestrasse 7 Postfach 90 01 20
W-6000 Frankfurt am Main 90 (DE)

(72) Erfinder: Schmölzer, Ernst
Wöhlerstrasse 18
W-6000 Frankfurt/Main 1 (DE)

(74) Vertreter: Grau, Ulf
c/o ALFRED TEVES GMBH Guerickestrasse 7
W-6000 Frankfurt (M) 90 (DE)

(54) **Lastabhängiger Bremskraftregler.**

EP 0 214 365 B2

**Beschreibung**

Die Erfindung bezieht sich auf einen lastabhängigen Bremskraftregler mit einem an einen Druckgeber anschließbaren, durch eine Reglergehäusebohrung begrenzten Einlaßraum, einem an einen Druckaufnehmer anschließaren, durch die Regelgehäusebohrung begrenzten Auslaßraum, einem dazwischengeschalteten, bei einem vorgebbaren Schaltdruck schließenden Hauptventil, einem funktionsmäßig parallel geschalteten Rückschlagventil, einem ein Verschlußstück des Hauptventils tragenden Stufenkolben, der mit einem ersten Abschnitt in einer den Einlaßraum mit dem Freien verbindenden ersten Borung abgedichtet geführt und durch die Kraft einer den Schaltdruck bestimmenden Feder in Öffnungsrichtung des Hauptventils belastet ist.

Bei einem bekannten Bremskraftregler (DE-OS 29 30 476) ist die dem Eingangsfluiddruck im Einlaßraum ausgesetzte Querschnittsfläche des ersten Kolbenabschnitts verhältnismäßig groß und die allein wirksame Fläche, deren Beaufschlageung durch den Fluiddruck der den Schaltdruck bestimmenden Federkraft entgegenwirkt. Wegen der verhältnismäßig großen Querschnittsfläche ist die der Federkraft entgegenwirkende Kraft des Kolbens mithin ebenfalls entsprechend groß, so daß eine Hebelübersetzung für die Federkraft erforderlich ist. Eine solche Hebelübersetzung ist aufwendig und sperrig.

Die FR-A-2 552 724 zeigt einen gatttungsgemäßen Regler in Twin-Bauweise mit versögerungsabhängiger Lastregelung.

Der Erfindung liegt die Aufgabe zugrunde, einen Bremskraftregler der gattungsgemäßen Art anzugeben, der einen einfacheren und raumsparenden Aufbau ermöglicht und eine Verringerung der Federkraft erlaubt.

Erfindungsgemäß ist diese Aufgabe durch die Kennzeichnenden Merkmale des Anspruchs 1 gelöst.

Bei dieser Ausbildung ist die den Umschaltdruck bestimmende Federkraft nicht mehr allein von der ersten Querschnittsfläche, sondern von der Differenz de beiden Querschnittsflächen abhängig und damit - bei gleichem Umschaltdruck wie bisher - wesentlich niedriger. Durch diese Verringerung der erforderlichen Federkraft kann die lastabhängige Ansteuerung direkt auf den Stufenkolben erfolgen. Eine Kraftübersetzung, z. B. in Form eines Hebels, entfällt daher, so daß sich ein kompakterer und kleinerer Aufbau ergibt. Daneben wird auch der im Fahrzeug nötige Einbauraum stark verkleinert. Durch den kleineren nötigen Einbauraum kann auch für jeden Bremskreis ein Einfach-Regler verwendet werden, wordurch einem Nachteil eines Twin-Eremskraftreglers begegnet wird, nämlich das Überbremsen bzw. Unterbremsen jeweils eines Rades bei Kurvenfahrt. Ein weiterer Vorteil ist darin zu sehen, daß die Querschnittsfläche des zweiten Kolbenabschnitts auch in das Druckminderungsverhältnis nach Erreichen des vorgebbaren Schaltdrucks eingeht, so daß dieses Verhältnis durch geringfügige Änderungen in weiten Grenzen beliebig gewählt werden kann.

Vorzugsweise ist dafür gesorgt, daß das Hauptventil im Inneren des Stufenkolbens ausgebildet ist und das Ventilverschlußstück des Hauptventils unter der Kraft einer sich am Stufenkolben abstützenden Feder in Schließrichtung belastet und bei einer in Richtung auf den Stufenkolben belastenden Federkraft bewirkten Bewegung des Stufenkolbens durch einen Anschlag vom Ventilsitz abhebbar ist. Bei dieser Ausbildung des Bremskraftreglers verläuft die Kennlinie der Abhängigkeit des Ausgangsfluiddrucks vom Eingangsfluiddruck bei ansteigendem und bei abfallendem Eingangsdruck stets unterhalb der Grenzkurve, oberhalb der eine Überbremsung mit der Gefahr des Blockierens der Räder auftritt. Dennoch ist ein raumsparender kompakter Aufbau möglich, weil das Hauptventil innerhalb des Stufenkolbens liegt.

Sodann kann das Ventilverschlußstück des Hauptventils zumindest einen Teil einer Kugelfläche bilden und dieser Teil mit einer den Ventilstiz des Hauptventils bildenden Kante zusammenwirken. Diese Ausbildung des Hauptventils ergibt bei einfacher Hersellbarkeit einen von der Kraft der Ansteuerfeder abhängigen, für bestimmte Beladungszustände genau definierten Schaltdruck.

Ferner kann dafür gesorgt sein, daß das Rückschlagventil eine den Stufenkolben in einer Ringnut umgebende Dichtungsmanschette mit einer das Verschlußstück des Rückschlagventils bildenden, an der Reglergehäusebohrung anliegenden Dichtungslippe aufweist. Dieses Rückschlagventil ist leicht herstellbar, weil das Rückschlagventil nur ein bewegliches Teil aufweist und keine engen Herstellungstoleranzen eingehalten werden müssen.

Eine andere Ausbildung kann darin bestehen, daß das Rückschlagventil eine das Verschlußstück des Hauptventils bildende, in einer Ringnut des Stufenkolbens eingesetzte Dichtungsmanschette mit einer das Verschlußstück des Rückschlagventils bildenden, am Stufenkolben, anliegenden Dichtungslippe aufweist. Hierbei kommt man mit einem einzigen, dem Hauptventil und dem Rückschlagventil gemeinsamen Verschlußstück aus.

Die Erfindung und ihre Weiterbildungen werden nachstehend anhand der Zeichnungen bevorzugter Ausführungsbeispiele näher beschrieben. Es zeigen:

Fig. 1 einen teilweisen Axialschnitt eines ersten Ausführungsbeispiels eines erfindungsgemäßen Bremskreftreglers,

Fig. 2 die Betriebstrennlinie des Bremskraftreglers nach Fig. 1,

Fig. 3 einen teilweisen Axialschnitt eines zweiten Ausführungsbeispiels eines erfindungsgemäßen Bremskraftreglers,

Fig. 4 einen teilweisen Axialschnitt eines dritten Ausführungsbeispiels eines erfindungsgemäßen bremskraftreglers und

Fig. 5 die Betriebskennlinie des Bremskraftreglers nach Fig. 4.

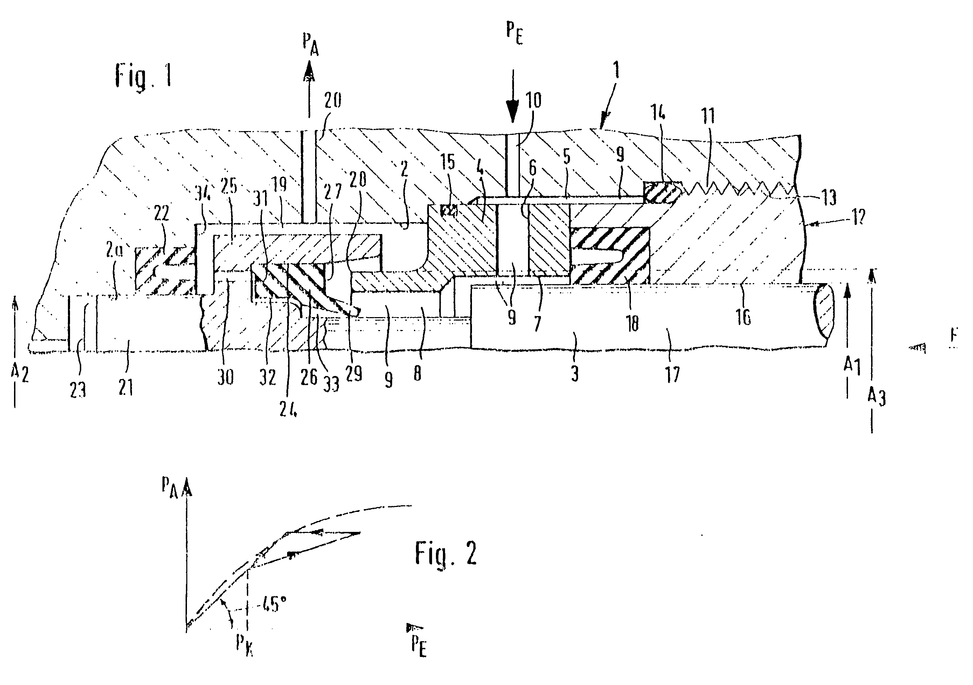

Der Bremskraftregler nach Fig. 1 hat in einem Reglergehäuse 1 eine abgestufte Bohrung 2, in der ein axial zweiteiliger, z. B. verschraubter, Stufenkolben 3 axial verschiebbar gelagert ist. Die Bohrung 2 begrenzt zusammen mit einem zylindrischen Ventilsitzstück 4 einen durch einen äußeren Ringraum 5, eine radiale Bohrung 6 im Ventilsitzstück 4 und eine Stufenbohrung 7, 8 im Ventilsitzstück 4 gebildeten Einlaßraum 9, der über eine Einlaßöffnung 10 durch einen Eingangsfluiddruck $P_E$ eines (nicht dargestellten) Druckgebers für den Bremsdruck beaufschlagt wird.

Das Ventilsitzstück 4 wird durch eine in einen Gewindeabschnitt 11 der Bohrung 2 geschraubte Sicherungsmutter 12 mit Außengewinde 13 gegen eine Stufe der Bohrung 2 gedrückt und in seiner Einbaulage festgehalten. Die Sicherungsmutter 12 trägt einen Dichtungsring 14, der die Bohrung 2 nach außen abdichtet. Das Ventilsitzstück 4 trennt mittels eines Dichtungsringes 15 die Bohrung 2 in Einlaßraum 9 und Auslaßraum 19.

In einer axialen Bohrung 16 der Sicherungsmutter 12 ist ein Abschnitt 17 des Stufenkolbens 3 verschiebbar gelagert und durch eine Dichtungsmanschette 18 abgedichtet.

Das Ventilsitzstück 4, die Bohrung 2 und der Stufenkolben 3 begrenzen ferner einen Auslaßraum 19, der über eine Auslaßöffnung 20 mit einem (nicht dargestellten) Druckaufnehmer, hier dem Druckzylinder einer Bremse, in Verbindung steht und diesen mit dem Ausgangsfluiddruck $P_A$ beaufschlagt.

Der Stufenkolben 3 ist mit einem vorderen Abschnitt 21 in der Bohrung 2a geführt, die einen Abschnitt der Bohrung 2 bildet, wobei eine Dichtungsmanschette 22 für eine Abdichtung des Spaltes zwischen dem Abschnitt 21 und der Bohrung 2a sorgt. Die Stirnseite 23 steht über einen vorderen Abschnitt der Bohrung 2 mit dem Freien in Verbindung, so daß sie dem Atmosphärendruck ausgesetzt ist.

In einer in Axialrichtung des Stufenkolbens 3 zum Ventilsitzstück 4 hin offenen Ringnut 24 eines Kolbenabschnitts 25, der einen größeren Durchmesser als die übrigen Kolbenabschnitte aufweist, ist eine Dichtungsmanschette 26 eingesetzt. Die Dichtungsmanschette 26 hat eine radiale Außenfläche 27, die mit einer einen Ventilsitz bildenden Kante 28 des Ventilsitzstücks 4 als Hauptventil zusammenwirkt. Ferner hat die Dichtungsmanschette 26 eine axial vorstehende und aufgrund ihrer Eigenelastizität am Stufenkolben 3 anliegende Dichtungslippe 29, die das Verschlußstück eines Rückschlagventils bildet. Der Auslaßraum 19 ist über eine axiale bohrung 30 im Kolbenabschnitt 25 mit dem Nutengrund der Ringnut 24 verbunden. Dort mündet die Bohrung 30 in einer Ringnut 31 und der Innenseite der Dichtungsmanschette 36. Die Ringnut 31 ist über einen oder mehrere zum Boden und zur inneren Seitenfläche der Ringnut 24 hin offenen Kanal 32 mit einem Hohlraum 33 verbunden, der durch den Stufenkolben 3 und die Dichtungslippe 29 begrenzt wird.

Der über die Bohrung 16 der Sicherungsmutter 12 hinausragende Abschnitt 17 des Stufenkolbens 3 wird direkt durch die Kraft F einer nicht dargestellten Druckfeder beaufschlagt, die mit einem lastabhängig beweglichen Teil des abzubremsenden Fahrzeugs verbunden ist.

Die Querschnittsfläche A, des Abschnitts 17 des Stufenkolbens 3 ist etwas größer als die Querschnittsfläche $A_2$ des Abschnitts 21 des Stufenkolbens 3, und die durch den Ventilsitz 28 des Hauptventils begrenzte Fläche $A_3$ ist größer ais die Querschnittsfläche $A_1$.

Nachstehend wird die Wirkungsweise des Druckreglers nach Fig. 1 unter Bezugnahme auf Fig. 2 beschrieben.

Solange der Eingangsfluiddruck $P_E$ kleiner als ein vorbestimmter Schaltdruck $P_K$ ist, der durch entsprechende Einstellung der (nicht dargestellten) den Stufenkolben 3 unmittelbar beaufschlagenden Feder ist, liegt der Stufenkolben 3 mit dem Abschnitt 25 an einer Stufe 34 der bohrung 2 an, und der Ausgangsfluiddruck $P_A$ ist gleich dem Eingangsfluiddruck $P_E$ und direkt proportional zu diesem (wobei das Steigungsmaß gleich 1 ist). Das Hauptventil 4, 26 ist mithin zunächst geöffnet. Die Kraft F der Feder ist so gewählt, daß gilt,

$$F = P_K \times (A_1 - A_2) \quad (1)$$

Da die Differenz der Flächen $A_1$ und $A_2$ verhältnismäßig klein ist und beliebig klein gewählt werden kann, kann eine entsprechend schwache Feder verwendet werden, die ohne Hebelübersetzung unmittelbar auf den Stufenkolben 3 einwirkt, so daß eine aufwendige Hebelübersetzung zur Übertragung der Federkraft auf den Stufenkolben entfällt. Zur Erzielung einer vorbestimmten Kraft kann die Feder einen langen Federweg aufweisen, so daß ihre Abmessungen nicht eng toleriert zu sein brauchen.

Sobald der Eingangsfluiddruck $P_E$ den Schaltdruck $P_K$ und damit die Kraft F der Feder überschreitet, wird der Stufenkolben 3 gegen die Kraft der Feder nach rechts in Fig. 1 verschoben und das Ventil 26, 28 geschlossen. Ein weiterer Druckanstieg im Einlaßraum 9 hat danach zur Folge, daß das Ventil 26, 28 sofort wieder geöffnet wird, weil der Stufenkolben 3 wegen des auf die Differenzfläche $A_3 - A_1$ wirkenden Differenzdrucks in Richtung der Kraft F nach links in Fig. 1 verschoben wird. Dadurch ergibt sich ein weiterer Anstieg des Ausgangsfluiddrucks $P_A$ im Auslaßraum 19, wobei der Ausgangsfluiddruck $P_A$ über die nunmehr wirksame Differenzfläche $A_3 - A_2$ wieder für eine Rechtsverschiebung des Stufenkolbens 3 gegen die Federkraft F sorgt. Im Ergebnis stellt sich ein enger Drosselspalt zwischen der Fläche 27 des Ventilverschlußstücks 26 und dem Ventilsitz 28 ein, wobei der Ausgangsfluiddruck $P_A$ mit geringerer Steigung m in Abhängigkeit von dem Eingangsfluiddruck $P_E$ ansteigt. Maßgebend für die Steigung m ist das Verhältnis der jeweils wirksamen Differenzflächen, nämlich

$$m = P_A/P_E = (A_3 - A_1)/(A_3 - A_2) \quad (2)$$

In beide Gleichungen (1) und (2) geht die Fläche $A_2$ ein. Die Federkraft F und die Steigung m können daher durch entsprechende Wahl dieser Fläche und der anderen Parameter weitgehend beliebig gewählt werden.

Wenn der Eingangsfluiddruck $P_E$ wieder verringert wird, wird das Hauptventil 26, 28 geschlossen, so daß der Ausgangsfluiddruck $P_A$ zunächst bei weiter fallendem Eingangsfluiddruck $P_E$ konstant bleibt, wie es durch den horizontalen Kurventeil in Fig. 2 angedeutet ist. Vernachlässigt man den Druck, mit dem die Dichtungslippe 29 des Rückschlagventils aufgrund ihrer Eigenelastizität am Stufenkolben 3 anliegt, dann wird das Rückschlagventil 3, 29 in dem Augenblick geöffnet, in dem der Eingangsfluiddruck $P_E$ gleich dem Ausgangsfluiddruck $P_A$ wird, was im Diagramm nach Fig. 2 im Schnittpunkt der horizontalen Linie mit der 45°-Linie der Fall ist. Danach nehmen der Eingangsfluiddruck $P_E$ und der Ausgangsfluiddruck $P_A$ wieder im gleichen Maße aufgrund des Druckausgleichs über das Rückschlagventil 3, 29 längs der 45°-Linie in Fig. 2 ab.

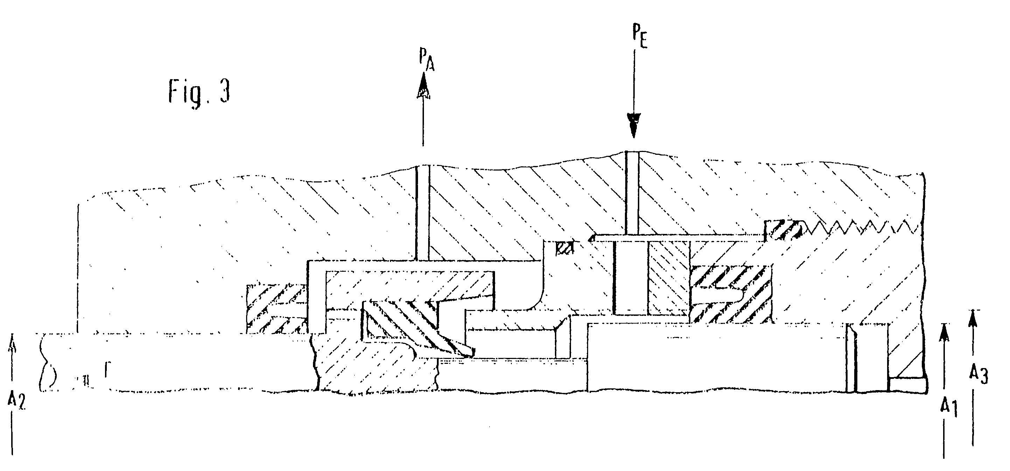

Das Ausführungsbeispiel nach Fig. 3 stimmt mit dem nach Fig. 1 überein, nur daß die Kraft F nicht durch eine Druckfeder, sondern durch eine Zugfeder auf den Stufenkolben ausgeübt wird.

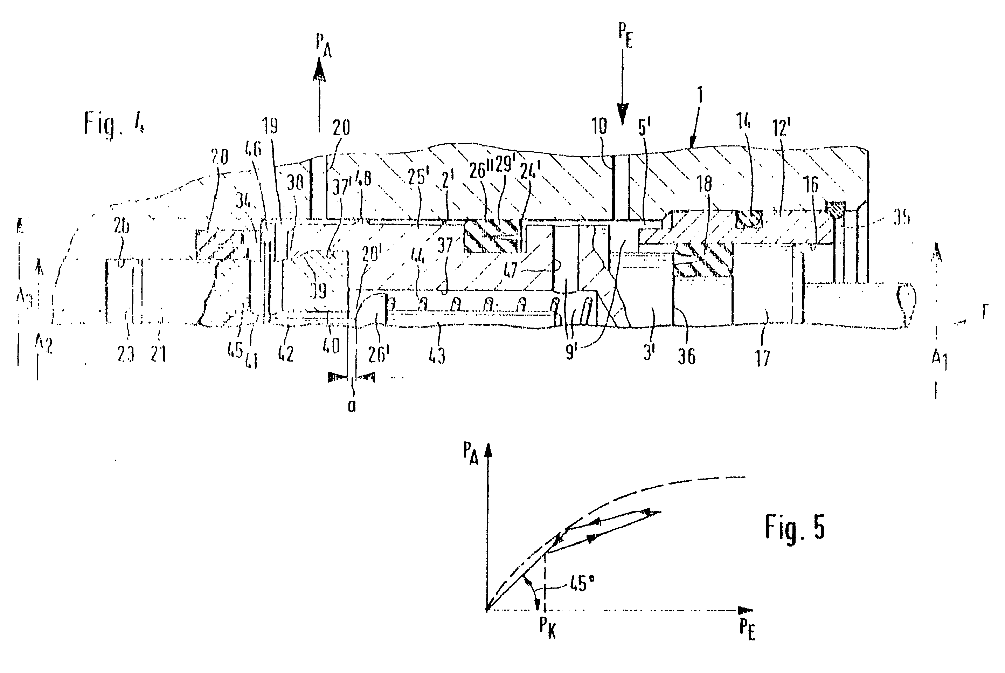

Bei dem bremskraftregler nach Fig. 4 enthält das Reglergehäuse 1 ebenfalls eine abgestufte Bohrung 2' mit einem darin verschiebbar gelagerten Stufenkolben 3'. Der Abschnitt 17 des Stufenkolbens 3' ist in der Bohrung 16 eines Sicherungsrings 12', der durch einen Seeger-Ring 35 axial in der Bohrung 2' gesichert ist, verschiebbar gelagert und mittels der in einer Ringnut 36 des Stufenkolbens 3' angeordneten Dichtungsmanschette 18 gegen die Bohrung 16 abgedichtet. Der Stufenkolben 3' enthält ferner eine zur Bohrung 2' koaxiale Bohrung 37 in einem mittleren Abschnitt 25'. Der Abschnitt 21 ist im Abschnitt 2b der Bohrung 2' verschiebbar gelagert und in eine Erweiterung 37' der Bohrung 37 einggsetzt, in der er durch Umbördeln des Öffnungsrandes 38 der Bohrungserweiterung 37' hinter eine Schulter 39 des Abschnitts 21 gesichert ist. Der Abschnitt 2b steht mit dem Freien in Verbindung.

Der Abschnitt 21 des Stufenkolbens 3' enthält eine koaxiale Bohrung 40 mit kleinerem Durchmesser als die Bohrung 37, die über eine radiale Bohrung 41 mit dem Auslaßraum 19 verbunden ist. Eine Kante 28' der Bohrung 40 bildet gleichzeitig den Ventilsitz für ein halbkugelförmiges Ventilverschlußstück 26', das mit einer stirnseitigen Verlängerungsstange 42 in die Bohrung 40 bis über den Rand der Bohrung 41 hinausragt und sich mit einer rückseitigen Verlängerungsstange 43 längs der Bohrung 37 erstreckt. Die Verlängerungsstange 43 ist von einer Druckfeder 44 umgeben, die sich einerseits am Verschlußstück 26' und andererseits am Boden der Bohrung 37 abstützt und die Verlängerungsstange 42 gegen einen Anschlag 45 in Form eines die Bohrung 41 durchsetzenden Querbolzens drückt, der an seinen Enden mit einem den Abschnitt 21 umgebenden und an der Stufe 34 anliegenden Ring 46 verbunden (z. B. verschweißt) ist. Die Bohrung 37 steht ferner über eine radiale Bohrung 47 mit einem den Kolben 3' umgebenden Ringraum 5' in Verbindung, in den die Einlaßöffnung 10 mündet. Die Bohrungen 37, 47 und der Ringraum 5' bilden gemeinsam den Einlaßraum 9'.

Im Abschnitt 25' des Stufenkolbens 3' ist ferner eine radial nach außen offene Ringnut 24' ausgebildet, in der eine Dichtungsmanschette 26'' mit einer an der Innenseite der bohrung 2' anliegenden Dichtungslippe 29' angeordnet ist. Die Dichtungslippe 29' bildet zusammen mit der Bohrung 2' das Rückschlagventil.

Auch bei dem Ausführungsbeispiel nach Fig. 4 sind die Verhältnisse der wirksamen Flächen so gewählt, daß die Querschnittsfläche $A_1$ des Kolbenabschnitts 17 größer als die Querschnittsfläche $A_2$ des Kolbenabschnitts 21 und die Querschnittsfläche $A_3$, die hier der durch den Außendurchmesser der Dichtungslippe 29' bestimmten Querschnittsfläche entspricht, größer als die Querschnittsfläche $A_1$ ist. Die Kraft der Feder 44 ist wesentlich kleiner als die Federkraft F, so daß sie gegenüber dieser vernachlässigbar ist. Für die Federkraft F gilt daher annähernd ebenfalls die Gleichung (1).

Damit ergibt sich für das Ausführungsbeispiel nach Fig. 4 folgende Wirkungsweise, die nachstehend unter Bezugnahme auf Fig. 5 beschrieben wird:

Bevor ein Eingangsfluiddruck $P_E$ aufgebaut ist, liegt der Stufenkolben 3' unter der Federkraft F mit seinem Abschnitt 25' über den Ring 46 an der Stufe 34 der Bohrung 2' an. Dabei wird das Hauptventil 26', 28' durch die Anlage der Verlängerungsstange 42 am Querbolzen 45 entgegen der Kraft der Feder 44 offengehalten. Wenn sich nunmehr ein Eingangsfluiddruck $P_E$ im Einlaßraum 9' aufbaut, steigt der Ausgangsfluiddruck $P_A$ im Auslsßraum 19 im gleichen Maße (im Verhältnis 1 : 1) bis zum Erreichen des Umschaltdrucks $P_K$ an. Sobald der Eingangsfluiddruck $P_E$ den Umschaltdruck $P_K$ überschreitet, überwiegt die durch den Eingangsfluiddruck $P_E$ auf die Differenzfläche $A_1 - A_2$ ausgeübte Kraft die Federkraft F (einschließlich der gegensinnig wirkenden Kraft der Feder 44), so daß der Stufenkolben 3' gegen die Federkraft F nach rechts in Fig. 4 verschoben und das Hauptventil 26', 28' geschlossen wird, weil die Feder 44 die Verlängerungsstange 42 des Ventilverschlußstücks 26′ weiterhin am Anschlag 45 hält. Nach Schließen des Hauptventils 26′, 28′ steigt der Eingangsfluiddruck $P_E$ im Einlaßraum 9′ weiter an, der Ausgangsfluiddruck $P_A$ im Auslaßraum 19 jedoch nicht, so daß das Hauptventil 26′, 28′ sofort wieder geöffnet wird und auch der Ausgangsfluiddruck $P_A$ weiter ansteigt und das Ventil wieder schließt. Im Ergebnis nimmt das Hauptventil 26′, 28′ eine Lage ein, in der sich zwischen dem Ventilverschlußstück 26′ und dem Ventilsitz 28′ lediglich ein geringer Drosselspalt einstellt, so daß der Ausgangsfluiddruck $P_A$ nur noch mit verminderter Steigung im Verhältnis zum Eingangsfluiddruck $P_E$ zunimmt, wie es durch den unteren Kurvenzweig des Vierecks im Diagramm nach Fig. 5 dargestellt ist. Auch für diese verminderte Steigung gilt die Gleichung (2).

Wenn danach der Eingangsfluiddruck $P_E$ wieder abnimmt, bleibt der Ausgangsfluiddruck $P_A$ zunächst konstant, wie es durch den horizontalen Kurvenabschnitt des Vierecks in Fig. 5 dargestellt ist, da der Eingangsfluiddruck $P_E$ noch größer als der Ausgangsfluiddruck $P_A$ ist, so daß die Dichtungslippe 29′ weiterhin an der Innenseite der Bohrung 2′ angedrückt bleibt und kein Druckausgleich über das Rückschlagventil 2′, 29′ erfolgen kann. Eine der Kolbenführung dienende Rippe 48 am Umfang des Kolbenabschnitts 25′ würde (bei geöffnetem Rückschlagventil) genügend Druckfluid ohne Drosselung zwischen sich und der Wand der bohrung 2′ durchlassen. Trotz des abnehmenden Eingangsfluiddrucks $P_E$ behält der Stufenkolben 3′ zunächst die Lage bei, die er während der Ausübung des höchsten Eingangsfluiddrucks $P_E$ einnahm, weil sich die Haftreibung zwischen der Dichtungslippe 24′ und der Wand der Bohrung 2′ sowie die Reibund der anderen Dichtelemente 18, 28 zunächst einer Verschiebung des Stufenkolbens 3′ widersetzt. Erst wenn diese Haftreibung durch den auf die Differenzfläche $A_3$ - $A_2$ wirken-den Ausgangsfluiddruck $P_A$, in Verbindung mit der Kraft der Feder 44, überwunden wird, verschiebt sich der Stufenkolben 3′ nach rechts in Fig. 4. Dadurch vergrößert sich das Volumen des Auslaßraums 19, so daß nunmehr der Ausgangsfluiddruck $P_A$ linear abnimmt, wie es durch den oberen schrägen, en den horizontalen Kurvenzweig anschließenden Kurvenzweig in Fig. 5 angedeutet ist. Wegen der durch die Bewegung des Stufenkolbens 3′ nach rechts ansteigenden Kraft der (nicht dargestellten) Ansteuerfeder ist die Steigung dieses abfallenden Kurvenzweiges etwas geringer als die des darunterliegenden Kurvenzweigs. Wenn der Eingangsfluiddruck $P_E$ wieder soweit abgebaut ist, daß er (annähernd) gleich dem Ausgangsfluiddruck $P_A$ ist, dann öffnet das Rückschlagventil 2′, 29′, so daß weiterer Druckabbau vom Auslaßraum 19 zum Einlaßraum 9′ über das Rückschlagventil - bei von der Wand der Bohrung 2′ abgehobener Dichtungslippe 29′ - erfolgen kann. Der Eingangsfluiddruck $P_E$ und der Ausgangsfluiddruck $P_A$ nehmen dann im wesentlichen wieder im gleichen Maße längs der 45°-Linie in Fig. 5 bis auf Null ab.

Das Ausführungsbeispiel nach Fig. 4 erfordert gegenüber den Ausführungsbeispielen nach den Fig. 1 und 3 zwar eine zusätzliche Feder 44 und ein zusätzliches, vom Rückschlagventilverschlußstück 29′ getrenntes Ventilverschlußstück 26′, doch hat das Ausführungsbeispiel nach Fig. 4 gegenüber den Ausführungsbeispielen nach den Fig. 1 und 3 den Vorteil, daß die Kennlinie der Abhängigkeit des Ausgangsfluiddrucks $P_A$ vom Eingangsfluiddruck $P_E$ nach Fig. 5 stets unterhalb der als gestrichelte Kurve eingezeichneten idealen Kennlinie verbleibt, unterhalb der eine Überbremsung vermieden wird. Bei dem Ausführungsbeispiel nach den Fig. 1 und 3 könnte dagegen trotz einer Wegnahme des Eingangsfluiddrucks $P_E$ zumindest kurzzeitig die ideale Kennlinie überschritten werden, wie ein Vergleich der in Fig. 2 durch ausgezogene Linien dargestellten mit der gestrichelt dargestellten idealen Kennlinie zeigt.

Auch bei dem Ausführungsbeispiel nach Fig. 4 kann anstelle der die Kraft F ausübenden Druckfeder eine Zugfeder, wie bei dem Ausführungsbeispiel nach Fig. 3, verwendet werden.

**Patentansprüche**

1. Lastabhängiger Bremskraftregler mit einem an einen Druckgeber anschließbaren, durch eine Reglergehäusebohrung (2) begrenzten Einlaßraum (9), einem an einen Druckaufnehmer anschließbaren, durch die Reglergehäusebohrung (2) begrenzten Auslaßraum (19), einem dazwischengeschalteten, bei einem vorgebbaren Schaltdruck schließenden Hauptventil (28, 27), einem funktionsmäßig parallelgeschalteten Rückschlagventil (29), einem ein Verschlußstück des Hauptventils tragenden Stufenkolben (3, 3′), der mit einem ersten Abschnitt (17) in einer den Einlaßraum mit dem Freien verbindenden ersten Bohrung (16) und mit einem zweiten Abschnitt (21) kleineren Querschnitts in einer an den Auslaßraum anschließenden zweiten Bohrung (2a, 2b) jeweils abgedichtet geführt ist und der durch die Kraft einer den Schaltdruck bestimmenden Feder (F) in Öffnungsrichtung des Hauptventils belastet ist, dadurch **gekennzeichnet**, daß die Stirnseite (23) des zweiten Abschnitts (21) des Stufenkolbens (3;3′) dem Atmosphärendruck ständig ausgesetzt ist, und daß die Feder (F) mit einem lastabhängig beweglichen Teil des abzubremsenden Fahrzeugs verbunden ist.

2. Bremskraftregler nach Anspruch 1, dadurch gekennzeichnet, daß das Hauptventil (26′, 28′) im Inneren des Stufenkolbens (3′) ausgebildet ist und das Ventilverschlußstück (26′) des Hauptventils (26′, 28′) unter der Kraft einer sich am Stufenkolben (3′) abstützenden Feder (44) in Schließrichtung belastet und bei einer in Richtung der den Stufenkolben (3′) belastenden Federkraft (F) bewirkten Bewegung des Stufenkolbens (3′) durch einen Anschlag (45) vom Ventilsitz (28′) abhebbar ist.

3. Bremskraftregler nach Anspruch 2, dadurch gekennzeichnet, daß das Ventilverschlußstück (26′) des Hauptventils (26′, 28′) zumindest einen Teil einer Kugelfläche bildet und dieser Teil mit einer den Ventilsitz (28′) des Hauptventils (26′, 28′) bildenden Kante zusammenwirkt.

4. Bremskraftregler nach Anspruch 2 oder 3, dadurch gekennzeichnet, daß das Rückschlagventil (2′, 29′) eine den Stufenkolben (3′) in einer Ringnut (24′) umgebende Dichtungsmanschette (26″) mit einer das Verschlußstück (29′) des Rückschlagventils (2′, 29′) bildenden, an der Reglergehäusebohrung (2′) anliegenden Dichtungslippe (29′) aufweist.

5. Bremskraftregler nach Anspruch 1, dadurch gekennzeichnet, daß das Rückschlagventil (3, 29) eine das Verschlußstück (26) des Hauptventils (26, 28) bildende, in einer Ringnut (24) des Stufenkolbens (3) eingesetzte Dichtungsmanschette (26) mit einer das Verschlußstück (29) des Rückschlagventils (3, 29) bildenden, am Stufenkolben (3) anliegenden Dichtungslippe (29) aufweist.

**Claims**

1. A load-sensitive brake power control with an inlet chamber (9) being connectible to a pressure generating unit and confined by a bore of the housing of the control (2), comprising an outlet chamber (19) being connectible to a pressure receiving unit and confined by the bore of the housing of the control (2), an interposed main valve (28, 27) which closes at a presettable switching pressure, a non-return valve (29) arranged in parallel in terms of function, a stepped piston (3) bearing a closing member of said main valve and being sealingly guided, with a first section (17), within a first bore (16) connecting said inlet chamber with the atmosphere and, with a second section of smaller diameter, within a second bore connecting to the outlet chamber, and being loaded, in the direction of opening of said main valve, by the force of a spring (F) determining the switching pressure, **characterized** in that the front side (23) of the second section (21) of the stepped piston (3, 3′) is constantly exposed to the atmospheric pressure, and in that the spring (F) is connected to a load-sensitively movable part of the vehicle to be braked.

2. A brake power control as claimed in claim 1, characterized in that the said main valve (26′, 28′) is configured in the interior of the said stepped piston (3′) and in that the valve closing member (26′) of the said main valve (26′, 28′) is loaded in the direction of closure under the force of a spring (44) taking support at the said stepped piston (3′) and by means of a stop (45) is liftable from the valve seat (28′) in the event of a movement of the said stepped piston (3′) brought about in the direction of the spring force (F) loading said stepped piston (3′).

3. A brake power control as claimed in claim 2, characterized in that the said valve closing member (26′) of said main valve (26′, 28′) forms at least a part of a spherical surface and in that said part interacts with an edge constituting the said valve seat (28′) of said main valve (26′, 28′).

4. A brake power control as claimed in claim 2 or in claim 3, characterized in that the said non-return valve (2′, 29′) is furnished with a sealing sleeve (26″) surrounding the said stepped piston (3′) in a circular groove (24′) and formed with a sealing lip (29′) constituting the closing member (29′) of the said non-return valve (2′, 29′) and being abutted against the bore (2′) of the housing of the control.

5. A brake power control as claimed in claim 1, characterized in that the said non-return valve (3, 29) is furnished with a sealing sleeve (26) which constitutes the closing member (26) of the said main valve (26, 28) and is inserted in a circular groove (24) of the said stepped piston (3) and which is formed with a sealing lip (29) representing the closing member (29) of the said non-return valve (3, 29) and being abutted against the said stepped piston (3).

**Revendications**

1. Régulateur de force de freinage actionné en fonction de la charge, comprenant une chambre d'entrée (9) qui peut être reliée à un générateur de pression et qui est délimitée par un alésage (2) de boîtier de régulateur, une chambre de sortie (19) qui peut être reliée à un récepteur de pression et qui est délimitée par l'alésage (2) du boîtier de régulateur, une valve principale (28, 27) intercalée qui se ferme en présence d'une pression de commande prédéfinie, une valve anti-retour (29) montée en parallèle, un piston étagé (3) qui supporte un élément de fermeture de la valve principale, dont une première portion (17) est guidée de façon étanche dans un premier alésage (16) reliant la chambre d'entrée à l'extérieur et qui est sollicité, par la force (F) d'un ressort déterminant la pression de commande, dans le sens d'ouverture de la valve principale, caractérisé en ce que la face frontale (23) de la seconde portion (21) du piston étagé (3 ; 3′) est exposée à la pression atmosphérique, et en ce que le ressort (F) est relié à une partie du véhicule à freiner qui se déplace en fonction de la charge.

2. Régulateur de force de freinage conforme à la revendication 1, caractérisé en ce que la valve principale (26′, 28′) est disposée à l'intérieur du piston étagé (3′) et que l'élément de fermeture (26′) de la valve principale (26′, 28′) est sollicité dans le sens de fermeture par la force d'un ressort (44) prenant appui

**EP 0 214 365 B2**

sur le piston étagé (3') et peut, lors d'un déplacement du piston étagé (3') s'effectuant dans le sens de la force élastique (F) exercée sur ce dernier, être décollé du siège de valve (28') par une butée (45).

3. Régulateur de force de freinage conforme à la revendication 2, caractérisé en ce que l'élément de fermeture (26') de la valve principale (26', 28') peut former au moins une partie d'une surface sphérique et ladite partie peut coopérer avec une arête formant le siège (28') de la valve principale (26', 28').

4. Régulateur de force de freinage conforme aux revendications 2 ou 3, caractérisé en ce que la valve anti-retour (2', 29') comporte une coupelle d'étanchéité (26") entourant le piston étagé (3') dans une gorge annulaire (24') et comprenant une lèvre d'étanchéité (29') qui forme l'élément de fermeture (29') de la valve antiretour (2', 29') et qui est appliquée contre l'alésage de boîtier de régulateur (2').

5. Régulateur de force de freinage conforme à la revendication 1, caractérisé en ce que la valve anti-retour (3, 29) comporte une coupelle d'étanchéité (26) qui forme l'élément de fermeture (26) de la valve principale (26, 28), qui est disposée dans une gorge annulaire (24) du piston étagé (3) et qui comporte une lèvre d'étanchéité (29) formant l'élément de fermeture (29) de la valve anti-retour (3, 29) et appliquée contre le piston étagé (3).

Fig. 1

Fig. 2

EP 0 214 365 B2

Fig. 3

EP 0 214 365 B2

EP 0 214 365 B2

Fig. 4

$P_A$

$P_E$

1

10  5'  14  12'

19  20  18  16

20  46  30  37' 48  25'  2'  26" 29' 24'  35

34  20' 44  37  47

2b  39  9'  3'  36  17

23  21  45 41  42  40  26'  43

$A_3$  $A_2$  $A_1$

a

Fig. 5

$P_A$

$P_K$

45°

$P_E$